# DEMANDE DE BREVET EUROPEEN

(11) **EP 0 553 032 A1**
(43) Date de publication de la demande: **28.07.1993**
(21) Numéro de dépôt: 93400153.8
(22) Date de dépôt: 22.01.1993
(51) Int. Cl.: A01B 15/02

(54) **Lame de labour et engin de labour comportant au moins une telle lame**

(30) Priorité: 24.01.1992 FR 9200774
(71) Demandeur: JAVERLHAC, Jean-Charles, Guimps, F-16300 Barbezieux (FR)
(72) Inventeur: JAVERLHAC, Jean-Charles, Guimps, F-16300 Barbezieux (FR)
(74) Mandataire: Nony, Michel

(57) **Abrégé**

L'invention est relative à une lame de labour.

Elle comporte un coutre vertical (1) sensiblement plan, muni à sa partie inférieure d'un élément (3) réalisé en tôle pliée qui comprend une partie centrale verticale (4) destinée à être assujettie à la partie inférieure du coutre (1), cette partie centrale (4) étant prolongée de chaque côté par une partie (5,6) repliée en aile de manière former un dièdre ouvert vers le bas, ces deux parties (5,6) étant destinées à déplacer la terre pour réaliser le labour.

## Description

La présente invention a pour objet une lame de labour et un engin de labour comportant au moins une telle lame.

On connait déjà des charrues constituées par un cadre supportant une pluralité de lames de labour dont l'extrémité inférieure pénètre dans le sol pour ameublir ou déplacer la terre.

La présente invention est relative à une telle lame qui présente de chaque côté un élément plan permettant de soulever la terre pour l'ameublir.

La présente invention a pour objet une lame de labour, caractérisée par le fait qu'elle comporte un coutre vertical sensiblement plan muni à sa partie inférieure d'un élément réalisé en tôle pliée qui comprend une partie centrale verticale destinée à être assujettie à la partie inférieure du coutre, cette partie centrale étant prolongée de chaque côté par une partie repliée en aile de manière à former un dièdre ouvert vers le bas, ces deux parties repliées étant destinées à déplacer la terre pour réaliser le labour.

Dans un premier mode de réalisation, l'élément en tôle pliée est réalisé en une seule pièce.

Dans un second mode de réalisation, cet élément est réalisé en deux pièces distinctes qui sont fixées sur le coutre vertical, de préférence avec les mêmes moyens de fixation.

Dans un mode de réalisation préféré de l'invention, l'une des deux parties repliées présente un bord extérieur sensiblement parallèle au plan du coutre qui est avantageusement muni d'un soc constitué par une pièce en acier rapportée, tandis que l'autre partie présente un bord oblique qui rejoint sensiblement l'extrémité avant de la partie centrale verticale.

On comprend que, selon ce mode de réalisation préféré de l'invention, la lame de labour présente sur un côté du coutre, sensiblement la forme d'un soc de charrue prolongé par la partie inférieure du versoir, tandis que sur l'autre côté du coutre la lame de labour présente une surface inclinée vers le bas et dont la largeur sensiblement nulle à l'avant s'accroît progressivement jusqu'à l'arrière.

Selon un mode de réalisation préféré de l'invention, la lame de labour comporte en outre une pièce d'usure de forme triangulaire qui est située au dessus de la partie centrale de manière à protéger cette dernière ainsi que la partie inférieure du coutre.

Selon un mode de réalisation particulier de l'invention, le coutre est prolongé vers le bas par une pièce verticale ayant sensiblement la forme d'une dérive.

La lame selon l'invention est réalisée par l'assemblage de pièces planes ou simplement pliées selon des lignes droites, pièces qui sont assemblées par des rivets ou de préférence par des boulons.

La présente invention a également pour objet un engin de labour, caractérisé par le fait qu'il comporte au moins une lame telle que décrite ci-dessus.

On obtient ainsi, grâce à l'invention, des lames d'engins de labour qui se sont révélées particulièrement efficaces et qui sont d'un prix de revient peu élevé du fait qu'elles ne nécessitent pas de pièces de forme en acier forgé.

De surcroît, les différents éléments de ces lames peuvent être facilement démontés pour être remplacés par l'utilisateur.

Dans le but de mieux faire comprendre l'invention on va en décrire maintenant à titre d'illustration et sans aucun caractère limitatif un mode de réalisation pris comme exemple et représenté sur le dessin annexé.

Sur ce dessin :
- la figure 1 est une vue de trois quarts avant d'une lame selon l'invention,
- la figure 2 est une vue de trois quarts arrière de la lame de la figure 1,
- la figure 3 est une vue en perspective éclatée correspondant à la figure 1, et
- la figure 4 est une vue arrière de la lame des figures 1 à 3.

On voit sur le dessin le coutre 1 qui est muni à sa partie supérieure d'orifices 2 destinés à réaliser sa fixation sur le cadre de la charrue.

On a également représenté la pièce en tôle pliée désignée dans son ensemble par le chiffre de référence 3.

Cette pièce comporte une partie centrale 4 destinée à être assujettie à la partie inférieure du coutre 1.

Dans le mode de réalisation représenté, cette partie centrale a une forme triangulaire. Le côté inférieur 4a de la partie centrale 4 est prolongé par une partie plane 5 repliée en aile.

Dans ce mode de réalisation, la partie 5 a une forme triangulaire dont un côté est constitué par la ligne 4a qui la réunit à la partie verticale 4 tandis qu'un deuxième côté 5a part de l'avant de la partie centrale 4 et s'en écartant vers l'arrière, et que le troisième côté 5b est disposé dans une direction sensiblement perpendiculaire à la direction du labour.

Une autre partie 6 en aile est réalisée par pliage de l'arête supérieure avant 4b de la partie 4.

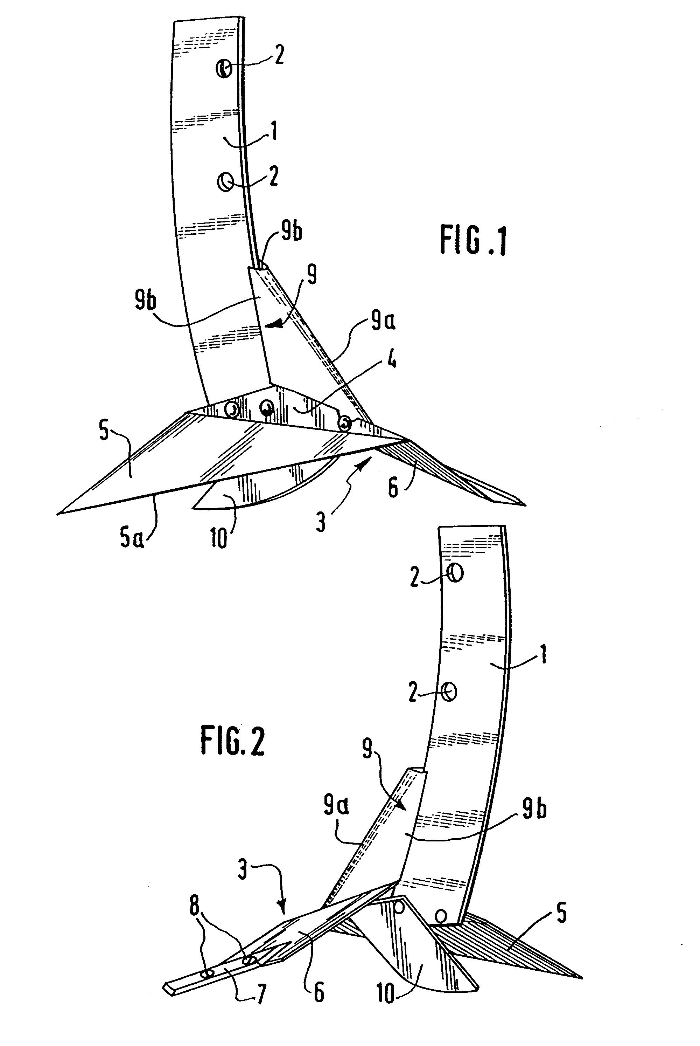

Comme on peut le voir sur la figure 2, la partie 6 a la forme générale d'un parallélogramme. Elle porte sur son côté opposé à la partie centrale 4 un soc 7 fixé par exemple par deux boulons 8.

Conformément à un mode de réalisation préféré de l'invention, on a représenté sur le dessin une pièce d'usure 9 qui, comme on le voit clairement sur les figures 1 et 2, est fixée sur l'arête 4b de la partie centrale 4 et qui s'engage sur la partie inférieure du coutre 1.

Cette pièce d'usure est avantageusement constituée par une tôle repliée autour de l'arête 9a de sorte que les bords arrière 9b de ces deux tôles peuvent venir se placer de part d'autre de la partie inférieure de l'arête 1a du coutre 1.

On voit également sur le dessin comment selon un mode de réalisation particulier une pièce 10 qui a sensiblement la forme d'une dérive est placée dans le prolongement du coutre 1 verticalement entre les parties 5 et 6 qui ont été décrites ci-dessus.

Comme cela a été schématiquement représenté sur le dessin, les pièces qui viennent d'être décrites sont assemblées par des boulons, ce qui permet de démonter facilement la lame selon l'invention, en particulier pour remplacer les pièces qui ont besoin d'être changées.

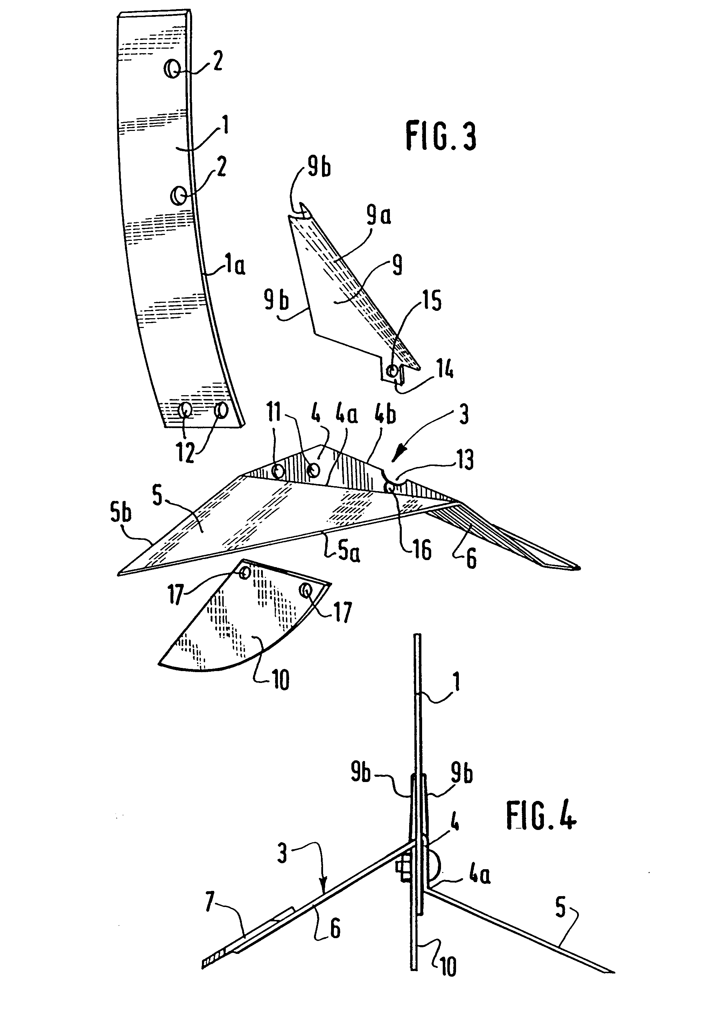

On voit sur le dessin et en particulier sur la figure 3, les deux orifices 11 de la partie centrale 4 qui permettent la fixation du coutre lequel est muni à sa partie inférieure d'orifices 12 correspondant.

Dans le mode de réalisation décrit, on a réalisé dans la plaque de tôle qui, par pliage, sert à former l'ensemble des parties 4, 5 et 6 mais avant pliage de cette plaque, un orifice 13 dont le centre se trouve sensiblement sur la ligne de pliage 4b qui réunit la partie centrale 4 et la partie repliée en aile 6.

Cette ouverture permet l'engagement d'un prolongement 14 réalisé dans la partie avant de la pièce d'usure 9.

On comprend que lorsque la partie centrale 4 est assujettie sur l'extrémité inférieure du coutre 1 par des boulons engagés dans les orifices 11 et 12, il est possible de maintenir en place la pièce d'usure 9 à l'aide d'un boulon qui s'engage dans les orifices 15 et 16 pratiqués respectivement dans le prolongement 14 de la pièce d'usure 9 et dans la partie centrale 4.

La pièce verticale inférieure 10 en forme de dérive possède également deux orifices 17 qui lui permettent d'être fixée dans le prolongement du coutre à l'aide des boulons qui sont engagés dans les orifices 16 et 11 de la partie centrale 4.

Selon un autre mode de réalisation de l'invention, la pièce 3 peut être réalisée en deux morceaux, la partie 5 étant reliée à la partie verticale 4 qui est séparée de la partie 6, alors que cette dernière comporte à sa limite haute une partie analogue à la partie 4, de telle sorte que les deux parties 5 et 6 qui sont indépendantes peuvent être fixées sur le coutre 1, par exemple à l'aide des mêmes boulons.

On voit que grâce à l'invention il est possible de réaliser une lame de labour à l'aide de pièces uniquement obtenues par découpage et pliage de tôles planes qui sont assemblées par un nombre réduit de boulons (au nombre de trois dans le mode de réalisation décrit).

Il est bien entendu que le mode de réalisation qui a été décrit ne présente aucun caractère limitatif et qu'il pourra être modifié sans sortir pour cela du cadre de l'invention.

En particulier il est clair que les boulons peuvent être remplacés par des rivets dans le cas où on ne désire pas rendre démontables les différentes parties qui constituent la lame.

De même la position des boulons ou des rivets ainsi que la forme et la surface des différentes parties de la pièce formant ledit dièdre peuvent être adaptées en fonction des nécessités.

## Revendications

1. Lame de labour, caractérisée par le fait qu'elle comporte un coutre vertical (1) sensiblement plan, muni à sa partie inférieure d'un élément (3) réalisé en tôle pliée qui comprend une partie centrale verticale (4) destinée à être assujettie à la partie inférieure du coutre (1), cette partie centrale (4) étant prolongée de chaque côté par une partie (5,6) repliée en aile de manière former un dièdre ouvert vers le bas, ces deux parties (5,6) étant destinées à déplacer la terre pour réaliser le labour.

2. Lame selon la revendication 1, caractérisée par le fait que l'élément (3) est réalisé en une seule pièce.

3. Lame selon la revendication 1, caractérisée par le fait que l'élément (3) est réalisé en deux pièces, dont chacune comporte une partie verticale pour être assujettie au coutre (1).

4. Lame selon l'une des revendications 1 à 3, caractérisée par le fait que l'une des deux parties repliées (6) présente un bord extérieur sensiblement parallèle au plan du coutre (1).

5. Lame selon la revendication 4, caractérisée par le fait que le bord extérieur d'une partie repliée (6) est muni d'un soc (7).

6. Lame selon l'une quelconque des revendications précédentes, caractérisée par le fait qu'une partie repliée (5) présente un bord extérieur oblique (5a) qui rejoint sensiblement l'extrémité avant de la partie centrale verticale (4).

7. Lame selon l'une quelconque des revendications précédentes, caractérisée par le fait qu'elle comporte une pièce d'usure (9) de forme triangulaire qui est fixée au dessus de la partie centrale (4) et qui se raccorde à la partie inférieure de l'arête (1a) du coutre (1).

8. Lame selon la revendication 7, caractérisée par le fait que la pièce d'usure (9) est constituée par une tôle repliée dont les bords d'extrémité (9b) sont situés de part et d'autre de la partie inférieure de l'arête (1a) du coutre (1).

9. Lame selon l'une quelconque des revendications précédentes, caractérisée par le fait qu'elle comporte une pièce plane (10) en forme de dérive disposée verticalement dans le plan du coutre et en dessous de la pièce repliée (3).

10. Lame selon l'une quelconque des revendications précédentes, caractérisée par le fait que les différents éléments sont reliés entre eux par des boulons.

11. Engin de labour, caractérisé par le fait qu'il comporte au moins une lame selon l'une quelconque des revendications précédentes.
